# FASCICULE DE BREVET EUROPEEN

(11) **EP 2 100 800 B1**
(45) Date de publication et mention de la délivrance du brevet: **25.05.2011**
(21) Numéro de dépôt: 09154841.2
(22) Date de dépôt: 11.03.2009
(51) Int. Cl.: B62D 25/18

(54) **Bavette anti-projections pour véhicules utilitaires**
Schmutzfänger-Schutz für Nutzfahrzeuge
Anti-projections mud flap for a commercial vehicle

(30) Priorité: 12.03.2008 FR 0801345
(43) Date de publication de la demande: 16.09.2009
(73) Titulaire: Fichet S.A., 07430 Davezieux (FR)
(72) Inventeur: Fichet, Jérôme, 07100, ANNONAY (FR)
(74) Mandataire: Maureau, Philippe

(56) Documents cités:
- EP-A- 0 903 285
- WO-A-93/12966
- FR-A- 2 719 278

## Description

La présente invention concerne une bavette anti-projections pour véhicules routiers, en particulier pour les véhicules utilitaires tels que camions, remorques et semi-remorques routières. Cette bavette anti-projections est notamment destinée à être montée sur des ailes, ailerons, garde-boue ou autres parties analogues de véhicules routiers, situés en regard de roues de ces véhicules, son rôle étant d'intercepter et d'évacuer l'eau pouvant être projetée par les roues, lorsque le véhicule se déplace par temps de pluie ou sur un sol mouillé.

Lors du déplacement des véhicules utilitaires par temps de pluie ou sur des chaussées mouillées, il se produit des projections d'eau et éventuellement de boue entraînée et soulevée par les roues, et formant un brouillard. En l'absence de protection particulière, les projections d'eau réduisent la visibilité vers l'arrière et sur les côtés du véhicule utilitaire concerné, et elles nuisent ainsi à la sécurité des véhicules suivants, notamment pour les dépassements. De plus, ces projections d'eau salissent le véhicule concerné lui-même.

Pour éviter de telles projections d'eau et leur conséquences fâcheuses, voire dangereuses, il a été déjà proposé divers dispositifs anti-projections, l'utilisation de ces dispositifs tendant à se généraliser pour respecter les prescriptions officielles actuellement applicables (directive européenne datant de l'année 1991) qui imposent la récupération d'un certain pourcentage de la quantité d'eau projetée.

Les premiers dispositifs anti-projections apparus comportaient une feuille en matière synthétique, sur une face de laquelle font saillie, ou sont rapportés, des poils ou des picots en matière plastique, ou encore un matelas de fils en matière plastique - voir exemple les documents de brevets FR 2638416 et EP 0134156. D'une façon générale, les dispositifs anti-projections de ce genre se sont avérés peu efficaces, car ils ne canalisent pas l'eau qui vient les percuter, pour éliminer cette eau. De plus, de tels dispositifs anti-projections sont difficiles à nettoyer, en particulier pour éliminer de la boue déposée entre les poils ou les picots de ces dispositifs.

D'autres dispositifs anti-projections, se voulant plus efficaces et « autonettoyants », utilisent la combinaison de deux ou plusieurs parois sensiblement parallèles, dont au moins l'une est perméable et apte à être traversée par les projections d'eau, et dont une autre est étanche et définit, avec la ou les parois précédentes, au moins un espace intermédiaire qui sert à capter l'eau atteignant le dispositif, et à canaliser cette eau vers le bas, pour finalement l'évacuer. Ces derniers dispositifs sont notamment réalisés avec au moins une plaque pleine donc étanche, l'ensemble étant réalisable en matière synthétique. A titre d'exemples, il est ici fait référence aux documents de brevets FR 2618118, EP 0556733, DE 4035107, GB 2078181 et FR 2719278.

Dans une réalisation particulière de ce type, décrite dans le document de brevet FR 2768688 ou son équivalent EP 0903285 (au nom du demandeur), le dispositif anti-projections se présente comme une bavette comprenant une paroi pleine, une première paroi perméable sous forme de grille plane s'étendant parallèlement à la paroi pleine, et une autre paroi perméable sous forme de grille ondulée, montée dans l'espace intermédiaire situé entre la paroi pleine et la première paroi perméable. Les ondulations de la grille ondulée viennent tangenter, par leurs sommets, alternativement la paroi pleine et la première grille plane, auxquelles elles ont fixées par des points de soudure ou des lignes de soudure. De multiples conduits parallèles d'évacuation de l'eau sont ainsi délimités par la paroi pleine, la grille plane et la grille ondulée. Une telle bavette anti-projections s'est révélée particulièrement efficace et, en particulier, capable des satisfaire aux prescriptions officielles.

Toutefois, la bavette anti-projections ici considérée conserve une certaine complexité dans sa structure et dans son procédé de fabrication, et elle conserve aussi un poids assez important, en raison de la présence conjointe de deux grilles, dont une grille de configuration ondulée. En particulier, pour la fixation par soudure de cette grille ondulée aux deux autres parois, il faut prévoir deux étapes successives de soudage, et il convient de faire coïncider avec précision les points ou lignes de soudure avec les sommets des ondulations de la grille, ce qui rend le processus de fabrication délicat, long et coûteux.

Enfin, le document WO 93/12966 prévoit une grille, fixée directement contre une paroi pleine suivant une ligne horizontale unique de points de soudure, sans ménager entre la grille et la paroi un espace ou des canaux pour la captation, la canalisation et l'évacuation de l'eau. Il s'agit ici d'un simple dispositif « brise-jet », d'efficacité notablement insuffisante.

La présente invention vise à remédier à ces inconvénients, et elle a donc pour but de fournir un dispositif anti-projections qui, tout en conservant une grande efficacité, soit d'une structure et d'une fabrication simplifiées et plus économiques.

A cet effet, l'invention a pour objet une bavette anti-projections pour véhicules routiers, en particulier pour véhicules utilitaires, comprenant une paroi pleine et une paroi perméable, réalisée sous la forme d'une grille, s'étendant de façon générale parallèlement à la paroi pleine et délimitant avec cette paroi pleine un espace de canalisation de l'eau, cette bavette anti-projections étant essentiellement caractérisée par le fait que la paroi perméable, réalisée sous la forme d'une grille, est unique et comporte des alvéoles disposés suivant des lignes ou rangées selon un motif, se répétant sur toute l'étendue de la grille, les fonds des alvéoles ou de certains alvéoles étant liés notamment par soudure à la paroi pleine.

Dans une forme de réalisation préférée de la bavette anti-projections selon l'invention, les alvéoles de la paroi perméable, réalisée sous la forme d'une grille, sont disposés suivant des lignes parallèles aux bords longitudinaux de la bavette de manière à délimiter, entre ces lignes d'alvéoles, des canaux d'évacuation de l'eau qui s'étendent parallèlement à ces bords longitudinaux.

Les alvéoles de la grille peuvent être ainsi répartis suivant un motif formant un quadrillage mais, de préférence, ces alvéoles sont disposés en quinconce, c'est-à-dire avec un décalage des alvéoles d'une ligne d'alvéoles à une ligne voisine.

Les alvéoles de la grille peuvent, en particulier, présenter chacun une forme oblongue, orientée dans le sens longitudinal des lignes suivant lesquelles sont disposés ces alvéoles, et notamment orientée dans une direction parallèle aux bords longitudinaux de la bavette anti-projections.

Dans l'ensemble, on obtient ainsi une bavette anti-projections de structure simple et légère, puisqu'elle comporte une seule grille, ce qui procure une économie de matière dans sa fabrication et aussi une simplification du processus de fabrication (comme précisé plus bas).

La bavette anti-projections selon l'invention conserve néanmoins une bonne rigidité mécanique, compte tenu des nombreux points de fixation de la grille, à savoir un point au fond de chaque alvéole, la flexion longitudinale de la bavette anti-projections étant en particulier limitée de sorte que cette bavette ne va pas « voler au vent ». Si nécessaire, cette rigidité intrinsèque obtenue par un effet de « poutre » peut être renforcée par des raidisseurs sous forme de tiges, engagées dans certains des canaux d'évacuation de l'eau délimités entre les alignements d'alvéoles, lesdites tiges s'étendant sur tout ou partie de la hauteur totale de la bavette anti-projections.

L'efficacité de cette bavette anti-projections est notamment assurée par le fait que sa grille unique est active sur pratiquement toute sa surface. Ainsi, l'eau qui frappe la région du fond d'un alvéole va rebondir et atteindre un autre point de l'alvéole, où elle pénétrera à l'intérieur de l'espace de canalisation de l'eau. De plus, dans le cas d'une disposition en quinconce des alvéoles, toute circulation horizontale de l'eau dans l'espace de canalisation est évitée, et ainsi toute l'eau captée est obligée de s'évacuer vers le bas.

La captation de l'eau venant percuter la grille peut encore être optimisée par la texture même de cette grille, en particulier par le choix de la forme et des dimensions des mailles de la grille, ainsi que par le choix approprié du profil des brins qui s'entrecroisent pour définir les mailles de la grille.

Cette grille peut comporter, en plus de ses alvéoles, des cavités plus étendues et à fond aplati, formées dans des zones prévues pour la fixation de la bavette anti-projections, lesdites cavités étant en particulier adaptées pour le logement, et pour l'appui sur leur fond, d'une vis de fixation ou d'un organe tel qu'un écrou ou une rondelle participant à la fixation de la bavette anti-projections sur son support. Une fixation directe du dispositif par soudage, par exemple contre un aileron, est aussi envisageable.

Dans un mode de réalisation particulier, la bavette anti-projections objet de l'invention est réalisée en deux parties, avec une partie supérieure constituée seulement par une grille à alvéoles appliquée et fixée contre l'intérieur d'une aile ou d'un aileron ou autre support formant ici la paroi pleine, et avec une partie inférieure dépassant sous l'aile ou l'aileron, la partie inférieure étant constituée par la grille à alvéoles et par une plaque plane constituant la paroi pleine. La surface intérieure de l'aile ou de l'aileron est ainsi mise à profit pour constituer une partie de la paroi pleine de la bavette.

En ce qui concerne la fabrication de la bavette anti-projections objet de l'invention, la grille unique étant réalisée en matière synthétique thermoformable, les alvéoles de cette grille et le cas échéant les cavités pour la fixation de cette bavette sont avantageusement obtenus par thermoformage, ce qui est réalisable dans un processus continu. Ainsi, le procédé global de fabrication de la bavette anti-projections peut comporter la succession d'étapes suivantes :
- Partir d'une grille en matière synthétique thermoformable, préalablement réalisée ;
- Thermoformer la grille pour obtenir les alvéoles, selon le motif voulu, sur toute l'étendue de la grille ;
- Refroidir la grille ;
- Assembler cette grille sur la paroi pleine, en soudant les fonds des alvéoles contre cette paroi ;
- Le cas échéant, réchauffer au moins localement la grille et réaliser par thermoformage les cavités pour fixation de la bavette.

L'opération de soudage des fonds des alvéoles de la grille contre la paroi pleine, qui peut consister par exemple en une soudure par ultrasons ou en une soudure par lame chaude, est réalisable en continu et ne nécessite pas de précision, ce qui rend la fabrication simple, rapide et économique, et réalisable « en ligne ».

La réalisation de l'ensemble de la bavette anti-projections en une seule matière, sans moyens d'assemblage métalliques de ses constituants, facilite aussi son recyclage en fin de vie.

L'invention sera mieux comprise à l'aide de la description qui suit, en référence au dessin schématique annexé représentant, à titre d'exemples, quelques formes de réalisation de cette bavette anti-projections pour véhicules industriels :
Figure 1 est une vue d'ensemble, en perspective, montrant une aile de véhicule utilitaire équipée d'une bavette anti-projections conforme à la présente invention ainsi que la roue de véhicule à laquelle sont associées l'aile et la bavette ;
Figure 2 est une vue similaire à la figure 1 , mais sans représentation de la roue de manière à donner une vision complète de la bavette ;
Figure 3 est une vue de face de la bavette anti-projections seule ;
Figure 4 est une vue en coupe transversale de cette bavette ;
Figure 5 est une vue partielle, en perspective, de la bavette des figures 3 et 4, montrant le détail de l'une des régions d'angle de cette bavette ;
Figure 6 est une vue en perspective d'une portion de la grille de ladite bavette, montrant sa texture ;
Figure 7 illustre, à plus grande échelle, le détail des brins de la grille selon la figure 6 ;
Figure 8 est une vue en perspective d'une portion de la grille, montrant une première variante de sa texture ;
Figure 9 illustre, à plus grande échelle, le détail des brins de la grille selon la figure 8 ;
Figure 10 est une vue en perspective d'une portion de la grille, montrant une deuxième variante de sa texture ;
Figure 11 illustre, à plus grande échelle, le détail des brins de la grille selon la figure 10 ;
Figure 12 est une vue en perspective d'une portion de la grille, montrant une troisième variante de sa texture ;
Figure 13 illustre, à plus grande échelle, le détail des brins de la grille selon la figure 12 ;
Figure 14 est une vue de face partielle de la grille, montrant le motif en quinconce formé par ses alvéoles, ici de forme oblongue ;
Figures 15 à 19 sont des vues similaires à la figure 14, montrant des variantes du motif et de la forme des alvéoles de la grille ;
Figure 20 est une vue partielle en perspective et en coupe d'une bavette anti-projections, avec cavité pour sa fixation ;
Figure 21 est une vue en coupe transversale de la bavette de la figure 20, passant par la cavité pour sa fixation ;
Figure 22 est une vue d'une bavette anti-projections selon l'invention, montée sur son support et munie de raidisseurs ;
Figure 23 représente, en perspective, une autre forme de réalisation de la bavette anti-projections selon l'invention, réalisée en deux parties et fixée à un aileron ;
Figure 24 est une vue partielle en perspective de la bavette de la figure 23, dans la zone de jonction de ses deux parties ;
Figure 25 montre, en perspective et en coupe, un détail de la fixation de la bavette des figures 23 et 24.

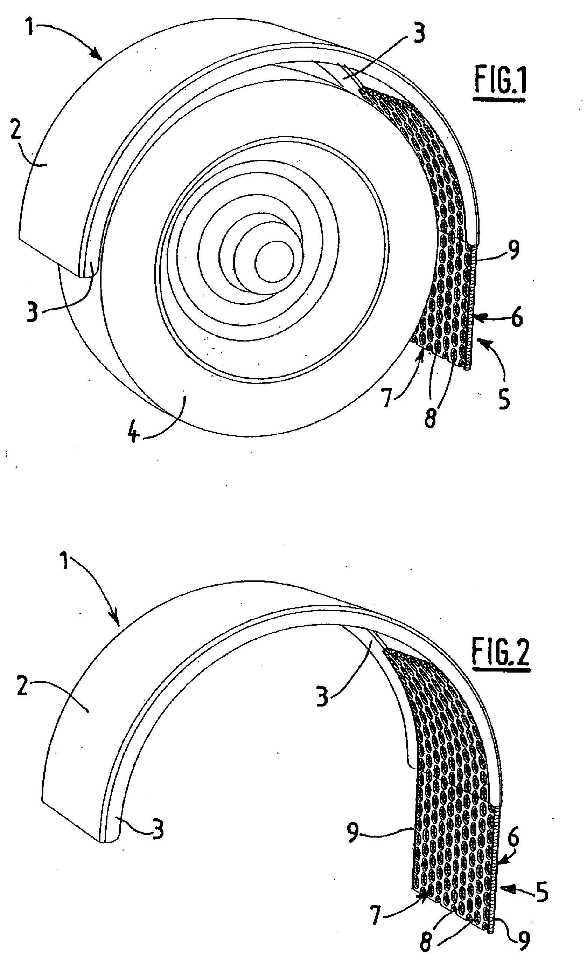

Les figures 1 et 2 représentent une aile 1 de véhicule routier utilitaire, aile qui présente une forme générale arrondie et qui est réalisable en toute matière, métallique ou synthétique. Dans l'exemple illustré, l'aile 1 comporte une surface principale 2 cylindrique, et deux rebords latéraux 3 pliés sensiblement à angle droit par rapport à la surface principale 2. Cette aile 1 entoure partiellement une roue 4 du véhicule utilitaire concerné, visible sur la figure 1 mais omise sur la figure 2.

L'aile 1 est prolongée vers le bas, à l'une de ses extrémités, par une bavette anti-projections désignée dans son ensemble par la référence 5, bavette qui tapisse aussi intérieurement une portion de la surface principale 2 cylindrique de l'aile 1. La bavette 5 se trouve ainsi placée en regard de la roue 4.

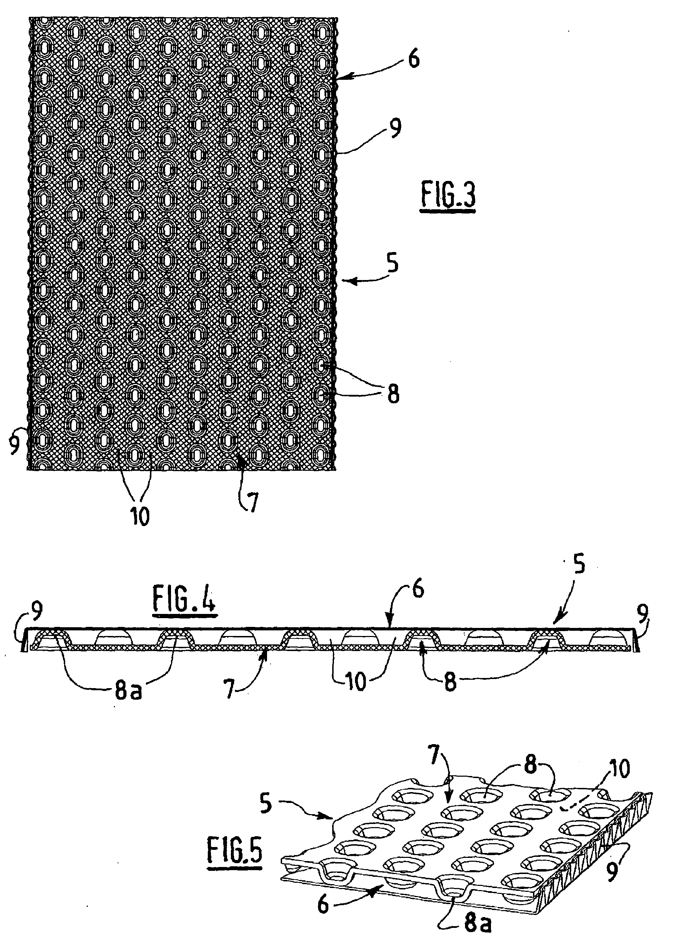

La structure de la bavette anti-projections 5 est illustrée par les figures 3 et suivantes, auxquelles il est maintenant fait référence.

D'une façon générale, la bavette 5 est constituée par l'assemblage d'une paroi pleine 6, donc une paroi imperméable à l'eau, et d'une grille 7, perméable à l'eau, qui s'étend de façon générale parallèlement à la paroi pleine 6.

La paroi pleine 6, du genre « plaque », est initialement plane mais elle possède une certaine flexibilité qui permet de la déformer et, en particulier, de la cintrer selon un certain rayon de courbure, pour l'appliquer par exemple contre une surface cylindrique (cf. figures 1 et 2).

La grille 7 est elle aussi initialement plane, sa structure ajourée permettant de la cintrer également. Cette grille 7 s'étend parallèlement à la paroi pleine 6, à une distance de l'ordre de un à deux centimètres de ladite paroi pleine 6. Lorsque la bavette anti-projections 5 est fixée sur l'aile 1, la grille 7 constitue la partie de la bavette 5 faisant face directement à la roue 4 et captant ainsi les projections d'eau et de boue soulevées par cette roue 4.

La paroi pleine 6 et la grille 7 sont réalisées en une matière plastique termoformable et soudable, par exemple en polyéthylène et, plus particulièrement, en un mélange de polyéthylène « haute densité » (PEHD) et de polyéthylène « basse densité » (PEBD).

Dans la grille 7 sont creusés, par thermoformage, des alvéoles 8 qui, dans le premier exemple de réalisation ici considéré, possèdent chacun une forme oblongue et sont répartis, selon un motif en quinconce, qui se répète sur toute l'étendue de cette grille 7.

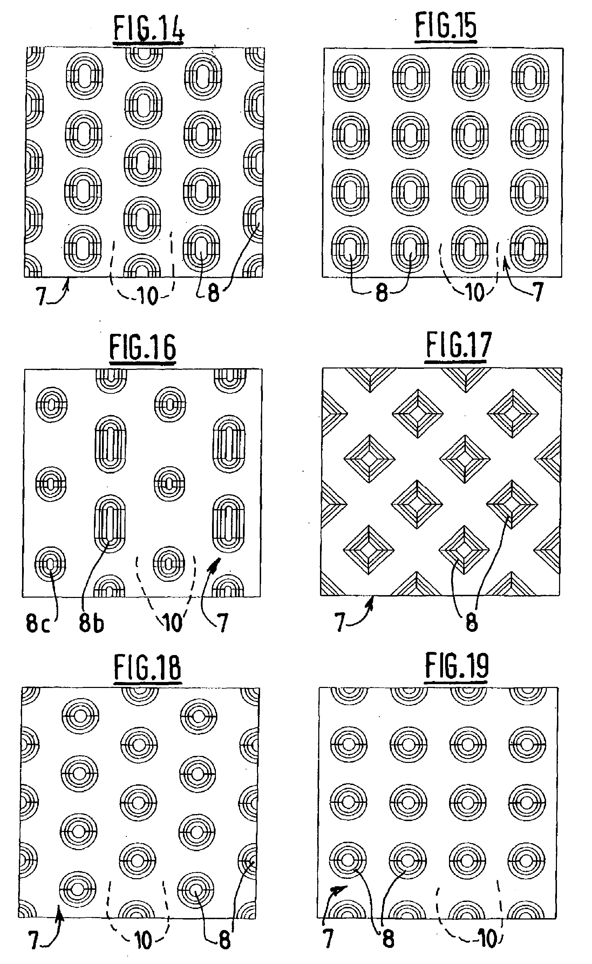

Plus particulièrement, comme le montrent les figures 3 et 14, les alvéoles 8 sont disposés suivant des lignes parallèles entre elles et aux bords longitudinaux 9 de la bavette 5, la forme oblongue des alvéoles 8 étant allongée dans une direction parallèle à ces bords longitudinaux 9. Les alvéoles 8 sont décalés, d'une ligne à la suivante, d'une hauteur égale par exemple à la moitié du « pas » séparant, dans chaque ligne, deux alvéoles 8 consécutifs.

Tous les alvéoles 8 possédant la même profondeur, les fonds 8a de ces alvéoles 8 sont liés par soudure à la paroi pleine 6. La grille 7 se trouve ainsi assemblée à la paroi pleine 6, et des canaux 10 d'évacuation de l'eau sont délimités entre les lignes parallèles d'alvéoles 8, dans l'épaisseur de la bavette 5.

Les bords longitudinaux 9 de la bavette 5, précédemment évoqués, sont formés par un pliage sensiblement à angle droit de la paroi pleine 6, pliage formant des rebords latéraux qui s'étendent sensiblement sur l'épaisseur de la bavette 5. Ces rebords latéraux sont avantageusement ondulés, afin de ne pas s'opposer à la flexion de la bavette 5 dans le sens longitudinal, les ondulations procurant un effet de « soufflet ».

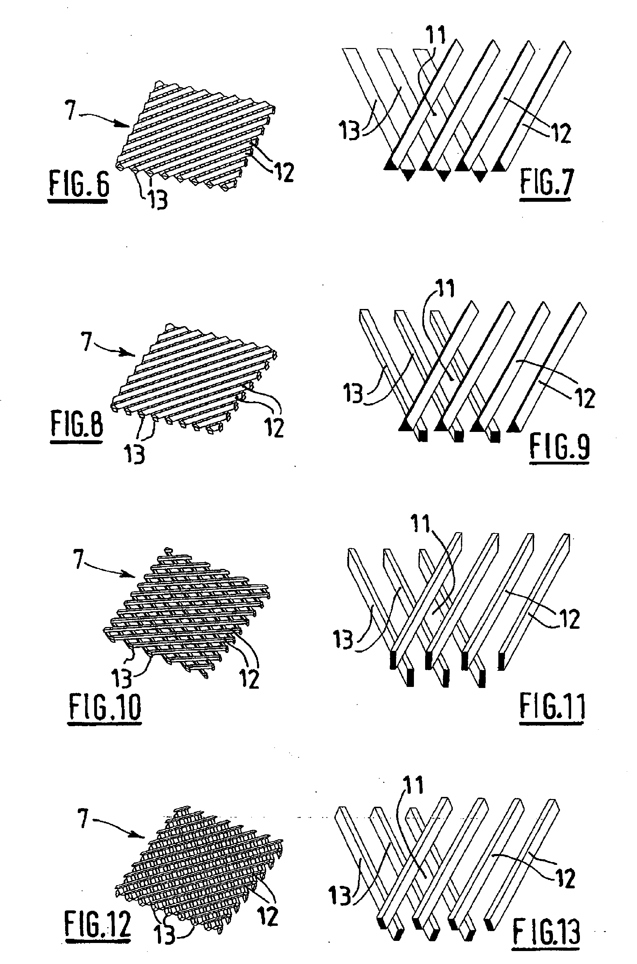

Dans le détail, la grille 7 comporte des mailles 11 en forme de losange ou de rectangle, qui résultent du croisement de brins 12 et 13 s'étendant selon deux directions obliques, comme le montrent les figures 6 à 13. Diverses textures possibles de la grille sont ici illustrées à titre d'exemples :
- Dans la réalisation selon les figures 6 et 7, les brins 12 de la première série et les brins 13 de la seconde série sont tous de section triangulaire, ces brins 12 et 13 étant liés entre eux sur un côté de leurs sections triangulaires respectives.
- Dans une première variante, montrée sur les figures 8 et 9, les brins 12 de la première série sont de section triangulaire, tandis que les brins 13 de la seconde série sont de section rectangulaire, ici proche d'une section carrée, ces brins 12 et 13 étant liés entre eux sur un côté de leurs sections respectives.
- Dans une deuxième variante, montrée sur les figures 10 et 11, les brins 12 de la première série et les brins 13 de la seconde série sont tous de section rectangulaire allongée, ces brins 12 et 13 étant liés entre eux sur un petit côté de leurs sections rectangulaires respectives.
- Dans une troisième variante, montrée sur les figures 12 et 13, les brins 12 de la première série et les brins 13 de la seconde série sont tous de section en forme de parallélogramme, ces brins 12 et 13 étant liés entre eux sur un petit côté de leurs sections respectives.

De telles grilles 7 peuvent être produites en continu à l'aide d'un outillage approprié.

Les figures 14 à 19 illustrent diverses variantes du motif selon lequel les alvéoles 8 sont formés, et de la forme même de ces alvéoles 8.
- La figure 14, déjà évoquée plus haut, montre la forme de réalisation de base, avec des alvéoles 8 de forme oblongue disposés en quinconce, tous ces alvéoles 8 possédant la même forme et les mêmes dimensions.
- La figure 15 illustre une première variante, dans laquelle les alvéoles 8, toujours identiques les uns aux autres et de forme oblongue, sont disposés selon un quadrillage régulier.
- La figure 16 illustre une deuxième variante, avec des alvéoles disposés en quinconce et de forme oblongue, mais non identiques entre eux, une alternance étant prévue entre des alvéoles 8b de plus grande longueur et d'autres alvéoles 8c de plus petite longueur.
- La figure 17 illustre une troisième variante, avec des alvéoles 8 encore disposés en quinconce mais de forme carrée.
- La figure 18 illustre une quatrième variante, avec des alvéoles 8 encore disposés en quinconce mais de forme circulaire.
- La figure 19 illustre une dernière variante, encore avec des alvéoles 8 de forme circulaire mais disposés selon un quadrillage régulier.

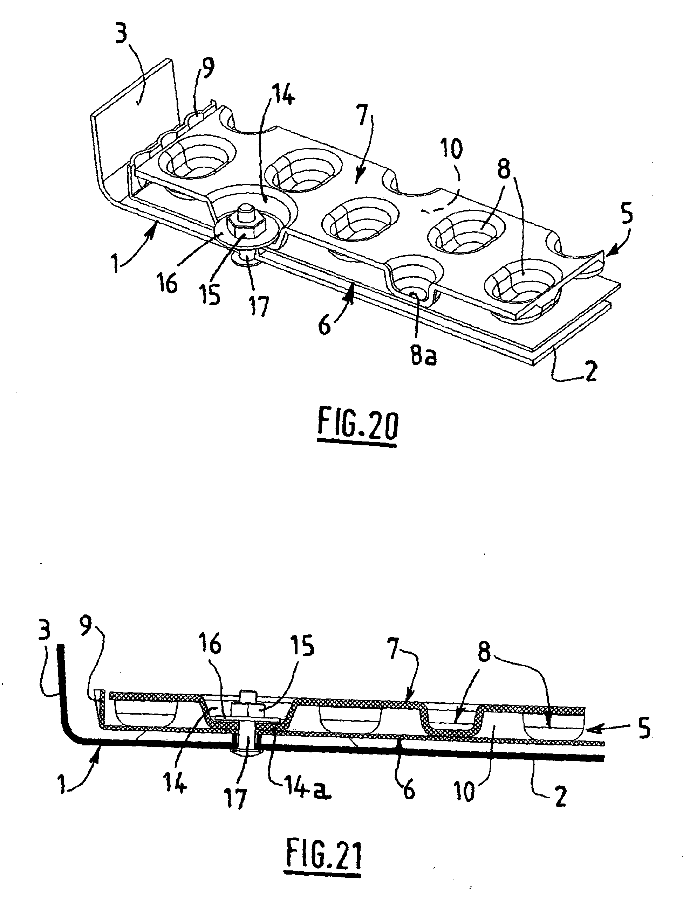

En se référant aux figures 20 et suivantes, on décrira maintenant des dispositions adaptées pour la fixation de l'ensemble de la bavette anti-projection 5 sur son support, tel que l'aile 1, cette fixation étant notamment réalisable par vissage.

A cet effet, en plus des alvéoles 8, la grille 7 comporte localement des cavités 14 qui sont plus étendues que ces alvéoles 8 et qui possèdent un fond aplati 14a, comme le montrent les figures 20 et 21. Chaque cavité 14, également obtenue par thermoformage de la grille 7, peut ainsi recevoir un écrou 15 et une rondelle 16, associés à une vis de fixation 17 qui, dans cet exemple, traverse l'aile 1 et la paroi pleine 6 de la bavette 5, la tête de la vis 17 prenant place du côté extérieur de l'aile 1. La rondelle 16 prend appui contre le fond 14a de la cavité 14, lors du serrage de la vis de fixation 17. Bien entendu, on peut aussi envisager une disposition inversée, dans laquelle la cavité 14 recevrait la tête de la vis 17.

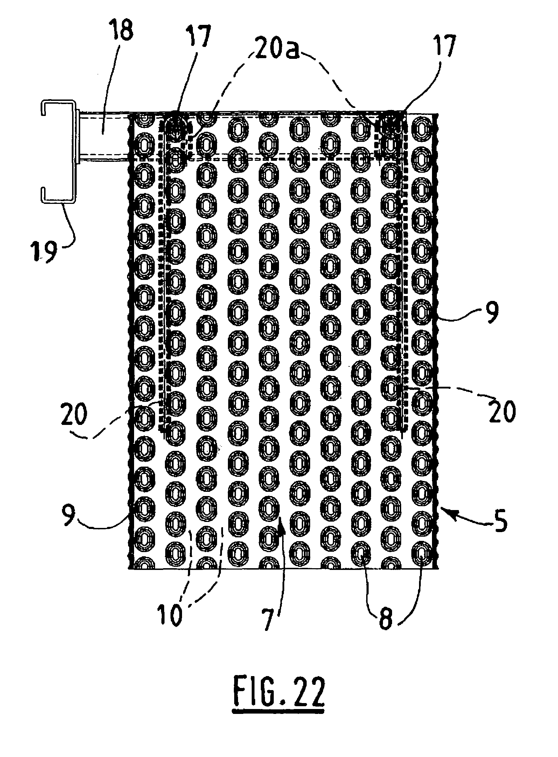

Comme le montre la figure 22, une bavette anti-projections 5 selon l'invention, de relativement grande hauteur, peut aussi être fixée au moyen de vis 17 uniquement par sa partie supérieure à une barre-support 18 horizontale solidaire d'un élément de châssis 19 du véhicule concerné. Dans ce cas, la bavette 5, comporte encore avantageusement des raidisseurs 20, par exemple au nombre de deux, constitués chacun par une tige de section ronde ou autre, laquelle prend place dans l'épaisseur de la bavette 5. Plus particulièrement, les tiges formant raidisseurs 20, s'étendant ici verticalement sur une partie de la hauteur totale de la bavette 5, sont engagées dans certains des canaux 10 d'évacuation de l'eau, délimités entre les alignements d'alvéoles 8. Chaque tige 20, formant raidisseur, comporte une extrémité supérieure recourbée en crochet 20a, qui vient entourer un alvéole 8 de la grille 7, notamment au niveau d'un point de fixation de la bavette 5, comportant par exemple une vis de fixation 17. Les tiges 20 peuvent être réalisées en métal ou en un autre matériau, tel qu'un matériau composite.

On obtient ainsi une bavette anti-projections 5 qui comporte une partie supérieure relativement rigide, et une partie inférieure non raidie donc plus souple. La longueur des tiges formant raidisseurs 20 détermine la hauteur de la partie supérieure rigide de la bavette 5, cette hauteur pouvant être ajustée selon l'effet désiré, et selon les préconisations officielles de résistance à la déflexion arrière.

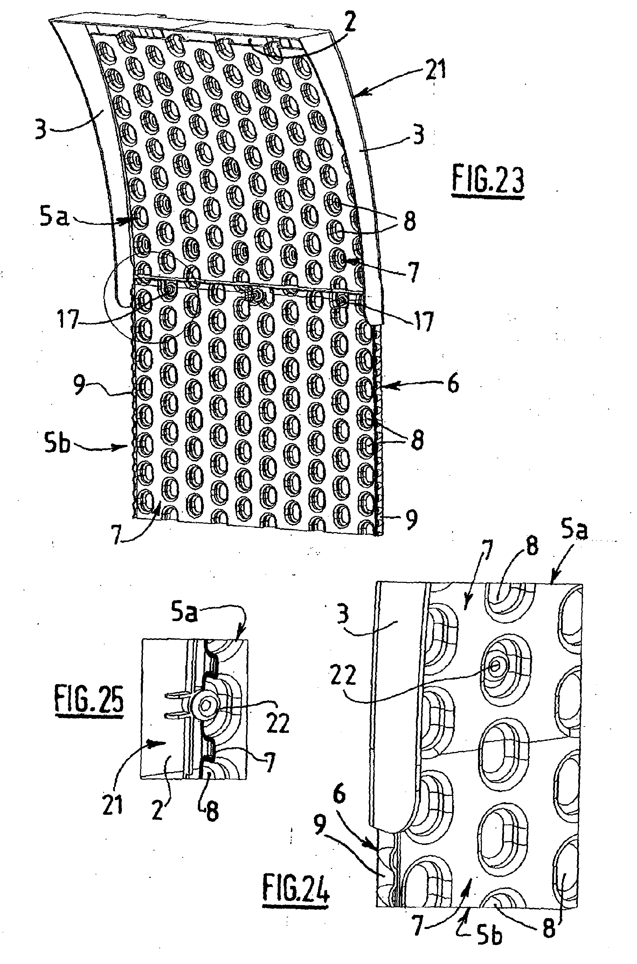

En se référant enfin aux figures 23 à 25, une bavette anti-projections selon l'invention est aussi réalisable en deux parties séparées 5a et 5b, avec une partie supérieure 5a appliquée contre un aileron 21, et une partie inférieure 5b dépassant sous l'aileron 21. Dans ce cas, la surface intérieure de l'aileron 21 constitue, pour la partie supérieure 5a, la paroi pleine de la bavette à laquelle est fixée ici directement la grille 7 à alvéoles 8. La partie inférieure 5b de cette bavette comporte la grille 7 et la paroi pleine 6 constituée par une plaque plane, conformément à la structure précédemment décrite.

La fixation de la partie inférieure 5b de la bavette à la base de l'aileron 21 est réalisable au moyen de vis 17, comme représenté sur la figure 23.

Par contre, dans la partie supérieure 5a de la bavette, comme représenté sur les figures 24 et 25, la fixation de la grille 7 à l'intérieur de l'aileron 21 est avantageusement réalisable par bouterollage, c'est-à-dire en créant sur l'aileron 21 une « tête » 22 qui est engagée au travers de la grille 7, notamment à l'intérieur d'un alvéole 8 de celle-ci, et qui empêche ainsi toute séparation de ladite grille 7. Le bouterollage permet d'obtenir une fixation mécanique de la grille 7 sur l'aileron 21, notamment dans le cas où ces deux pièces sont réalisées dans des matières différentes qui ne peuvent pas être assemblées directement l'une à l'autre par soudure.

L'aileron 21 n'est ici qu'un exemple de support pour la bavette anti-projections. La partie supérieure 5a de cette bavette en deux parties pourrait aussi être appliquée et fixée contre une portion d'une aile ou d'un garde-boue de véhicule utilitaire.

En utilisation, lorsque le véhicule équipé d'une telle bavette anti-projections 5 roule par temps de pluie ou sur un sol mouillé, l'eau et les particules projetées par la roue 4 passent au travers des mailles 11 de la grille 7, et sont ensuite évacuées vers le bas par les canaux 10 formés dans l'épaisseur de la bavette 5. Les rebords latéraux 9 améliorent encore l'efficacité de cette bavette 5, en empêchant que l'eau canalisée dans les canaux 10 ne ressorte par les côtés de ladite bavette 5.

On ne s'éloignerait pas du cadre de la présente invention, telle que définie par les revendications annexées :
- en modifiant la forme, notamment le contour de la bavette, en fonction de sa destination ;
- en réalisant cette bavette anti-projections en tous matériaux appropriés, notamment thermoformables ;
- en formant les alvéoles selon toute configuration, orientation et répartition ;
- en prévoyant toute texture pour la grille ;
- en prévoyant de fixer non pas les fonds de tous les alvéoles de la grille, mais seulement les fonds de certains de ces alvéoles, contre la paroi pleine ;
- en prévoyant tous moyens adaptés pour la fixation de la bavette anti-projections contre une aile ou sur tout autre support disponible sur le véhicule concerné, ces moyens de fixation n'étant pas nécessairement mécaniques, du genre vissage ou rivetage ou agrafage ou sertissage, mais pouvant aussi, selon les matériaux constitutifs de l'aile ou du support, consister en une fixation directe par soudage, par exemple par ultrasons, ou en une fixation par bouterollage ;
- en fabriquant cette bavette anti-projections selon tout procédé approprié, de manière continue ou discontinue.

## Revendications

1. Bavette anti-projections pour véhicules routiers, en particulier pour véhicules utilitaires, comprenant une paroi pleine (6) et une paroi perméable, réalisée sous la forme d'une grille (7), s'étendant de façon générale parallèlement à la paroi pleine (6) et délimitant avec cette paroi pleine (6) un espace (10) de canalisation de l'eau, **caractérisée en ce que** la paroi perméable, réalisée sous la forme d'une grille (7), est unique et comporte des alvéoles (8) disposés suivant des lignes ou rangées selon un motif, se répétant sur toute l'étendue de la grille (7), les fonds (8a) des alvéoles (8) ou de certains alvéoles étant liés notamment par soudure à la paroi pleine (6).

2. Bavette anti-projections selon la revendication 1, **caractérisée en ce que** les alvéoles (8) de la paroi perméable, réalisée sous la forme d'une grille (7), sont disposés suivant des lignes parallèles aux bords longitudinaux (9) de la bavette (5) de manière à délimiter, entre ces lignes d'alvéoles (8), des canaux (10) d'évacuation de l'eau qui s'étendent parallèlement à ces bords longitudinaux (9).

3. Bavette anti-projections selon la revendication 2, **caractérisée en ce que** les alvéoles (8) de la grille (7) sont répartis suivant un motif formant un quadrillage.

4. Bavette anti-projections selon la revendication 2, **caractérisée en ce que** les alvéoles (8) de la grille (7) sont disposés en quinconce, c'est-à-dire avec un décalage des alvéoles (8) d'une ligne d'alvéoles à une ligne suivante.

5. Bavette anti-projections selon l'une des revendications 2 à 4, **caractérisée en ce que** les alvéoles (8) de la grille (7) présentent une forme oblongue, orientée dans le sens longitudinal des lignes suivant lesquelles sont disposés ces alvéoles (8), et notamment orientée dans une direction parallèle aux bords longitudinaux (9) de la bavette anti-projections (5).

6. Bavette anti-projections selon l'une des revendications 2 à 7, **caractérisée en ce qu'**elle comporte des raidisseurs sous forme de tiges (20), engagées dans certains des canaux (10) d'évacuation de l'eau délimités entre les alignements d'alvéoles (8), lesdites tiges (20) s'étendant sur tout ou partie de la hauteur totale de la bavette anti-projections (5).

7. Bavette anti-projections selon la revendication 6, **caractérisée en ce que** chaque tige (20) formant raidisseur comporte une extrémité supérieure recourbée en crochet (20a) et venant entourer un alvéole (8) de la grille (7), notamment au niveau d'un point de fixation (17) de la bavette (5).

8. Bavette anti-projections selon l'une des revendications 1 à 7, **caractérisée en ce que** la grille (7) comporte, en plus de ses alvéoles (8), des cavités (14) plus étendues et à fond aplati, formées dans des zones prévues pour la fixation de la bavette anti-projections (5), lesdites cavités (14) étant en particulier adaptées pour le logement, et pour l'appui sur leur fond (14a), d'une vis de fixation (17) ou d'un organe tel qu'écrou (15) ou rondelle (16) participant à la fixation de la bavette (5) sur son support (10).

9. Bavette anti-projections selon l'une des revendications 1 à 8, **caractérisée en ce qu'**elle est réalisée en deux parties (5a, 5b), avec une partie supérieure (5a) constituée par une grille (7) à alvéoles (8) appliquée et fixée contre l'intérieur d'une aile (1) ou d'un aileron (21) ou autre support formant ici la paroi pleine, et avec une partie inférieure (5b) dépassant sous l'aile (1) ou l'aileron (21), la partie inférieure (5b) étant constituée par la grille (7) à alvéoles (8) et par une plaque plane (6) constituant la paroi pleine.

10. Bavette anti-projections selon l'une des revendications 1 à 9, **caractérisée en ce que**, la grille (7) unique étant réalisée en matière synthétique thermoformable, les alvéoles (8) de cette grille (7) et le cas échéant les cavités (14) pour la fixation de cette bavette (5) sont obtenus par thermoformage.

11. Procédé de fabrication d'une bavette anti-projections (5) selon la revendication 10, **caractérisé en ce qu'**il comporte la succession d'étapes suivantes :
- Partir d'une grille (7) en matière synthétique thermoformable, préalablement réalisée ;
- Thermoformer la grille (7) pour obtenir les alvéoles (8), selon le motif voulu, sur toute l'étendue de la grille (7) ;
- Refroidir la grille (7);
- Assembler cette grille (7) sur la paroi pleine (6), en soudant les fonds (8a) des alvéoles (8) contre cette paroi (6) ;
- Le cas échéant, réchauffer au moins localement la grille (7) et réaliser par thermoformage les cavités (14) pour fixation de la bavette (5).

## Claims

1. An anti-projections mud flap for a road vehicle, in particular a commercial vehicle, comprising a solid wall (6) and a permeable wall, made in the form of a grate (7), extending generally parallel to the solid wall (6) and defining, with said solid wall (6), a space (10) for channeling water, **characterized in that** the permeable wall, made in the form of a grate (7), is unique and includes cells (8) arranged in lines or rows following a pattern, repeated over the entire expanse of the grate (7), the bottoms (8a) of the cells (8) or of certain cells being connected in particular by welding to the solid wall (6).

2. The anti-projections mud flap according to claim 1, **characterized in that** the cells (8) of the permeable wall, made in the form of a grate (7), are arranged in lines parallel to the longitudinal edges (9) of the mud flap (5) so as to define, between said lines of cells (8), channels (10) for evacuating water that extend parallel to said longitudinal edges (9).

3. The anti-projections mud flap according to claim 2, **characterized in that** the cells (8) of the grate (7) are distributed following a pattern forming a grid.

4. The anti-projections mud flap according to claim 2, **characterized in that** the cells (8) of the grate (7) are arranged in staggered rows, i.e. with the cells (8) of one line of cells being offset relative to a subsequent line.

5. The anti-projections mud flap according to one of claims 2 to 4, **characterized in that** the cells (8) of the grate (7) are oblong, oriented in the longitudinal direction of the lines along which these cells (8) are arranged, and in particular oriented in a direction parallel to the longitudinal edges (9) of the anti-projections mud flap (5).

6. The anti-projections mud flap according to one of claims 2 to 7, **characterized in that** it includes stiffeners in the form of rods (20), engaged in some of the water evacuation channels (10) defined between the lines of cells (8), said rods (20) extending over all or part of the total height of the anti-projections mud flap (5).

7. The anti-projections mud flap according to claim 6, **characterized in that** each rod (20) forming a stiffener includes an upper end curved in a hook (20a) and surrounding a cell (8) of the grate (7), in particular at a fastening point (17) of the mud flap (5).

8. The anti-projections mud flap according to one of claims 1 to 7, **characterized in that** the grate (7) includes, in addition to its cells (8), more expansive cavities (14) with flat bottoms, formed in areas provided for fastening of the anti-projections mud flap (5), said cavities (14) in particular being adapted for housing, and for bearing on the bottom (14a) thereof, of a fastening screw (17) or a member such as a nut (15) or washer (16) participating in fastening the mud flap (5) on its support (10).

9. The anti-projections mud flap according to one of claims 1 to 8, **characterized in that** it is made in two parts (5a, 5b), with an upper part (5a) formed by a grate (7) with cells (8) pressed and fastened against the inside of a wing (1) or a fin (21) or other support forming the solid wall here, and with a lower part (5b) protruding under the wing (1) or fin (21), the lower part (5b) being formed by the grate (7) with cells (8) and by a solid plate (6) forming the solid wall.

10. The anti-projections mud flap according to one of claims 1 to 9, **characterized in that**, the single grate (7) being made from a thermoformable synthetic material, the cells (8) of said grate (7) and, if applicable, the cavities (14) for fastening said mud flap (5) are obtained by thermoforming.

11. A method for making an anti-projections mud flap (5) according to claim 10, **characterized in that** it comprises the following sequence of steps:
- Starting from a grate (7) made from a thermoformable synthetic material, made beforehand;
- Thermoforming the grate (7) to obtain the cells (8), following the desired pattern, over the entire expanse of the grate (7);
- Cooling the grate (7);
- Assembling said grate (7) on the solid wall (6), by welding the bottoms (8a) of the cells (8) against said wall (6);
- If applicable, at least locally heating the grate (7) and making the cavities (14), by thermoforming, for fastening the mud flap (5).

## Patentansprüche

1. Schmutzfänger-Schutz für Straßenfahrzeuge, insbesondere für Nutzfahrzeuge, der eine Vollwand (6) und eine durchlässige Wand umfasst, die in Form eines Gitters (7) ausgebildet ist, die sich im Allgemeinen parallel zur Vollwand (6) erstreckt und mit dieser Vollwand (6) einen Raum (10) zur Kanalisierung von Wasser begrenzt, **dadurch gekennzeichnet, dass** die durchlässige Wand, die in Form eines Gitters (7) ausgebildet ist, einzig ist und Wabenzellen (8) umfasst, die in Zeilen oder Reihen gemäß einem Motiv angeordnet sind, das sich über die gesamte Größe des Gitters (7) wiederholt, wobei die Böden (8a) der Wabenzellen (8) oder einiger Wabenzellen vor allem durch Schweißen mit der Vollwand (6) verbunden sind.

2. Schmutzfänger-Schutz nach Anspruch 1, **dadurch gekennzeichnet, dass** die Wabenzellen (8) der durchlässigen Wand, die in Form eines Gitters (7) ausgebildet ist, gemäß Zeilen parallel zu den Längsrändern (9) des Schutzes (5) derart angeordnet sind, dass sie zwischen diesen Zeilen der Wabenzellen (8) Wasserableitkanäle (10) begrenzen, die sich parallel zu diesen Längsrändern (9) erstrecken.

3. Schmutzfänger-Schutz nach Anspruch 2, **dadurch gekennzeichnet, dass** die Wabenzellen (8) des Gitters (7) gemäß einem Motiv verteilt sind, das ein Karomuster bildet.

4. Schmutzfänger-Schutz nach Anspruch 2, **dadurch gekennzeichnet, dass** die Wabenzellen (8) des Gitters (7) versetzt angeordnet sind, das heißt, mit einer Verschiebung der Wabenzellen (8) von einer Wabenzellenzeile zu einer folgenden Zeile.

5. Schmutzfänger-Schutz nach einem der Ansprüche 2 bis 4, **dadurch gekennzeichnet, dass** die Wabenzellen (8) des Gitters (7) eine längliche Form aufweisen, die in Längsrichtung der Zeilen ausgerichtet ist, gemäß denen diese Wabenzellen (8) angeordnet sind, und vor allem in einer Richtung parallel zu den Längsrändern (9) des Schmutzfänger-Schutzes (5) ausgerichtet sind.

6. Schmutzfänger-Schutz nach einem der Ansprüche 2 bis 7, **dadurch gekennzeichnet, dass** er Versteifungen in Form von Stangen (20) aufweist, die in einige der zwischen den Anordnungen von Wabenzellen (8) begrenzten Wasserableitungskanäle (10) eingesetzt sind, wobei sich die Stangen (20) über die gesamte oder einen Teil der Gesamthöhe des Schmutzfänger-Schutzes (5) erstrecken.

7. Schmutzfänger-Schutz nach Anspruch 6, **dadurch gekennzeichnet, dass** jede versteifungsbildende Stange (20) ein oberes, hakenförmig gebogenes Ende (20a) aufweist, das eine Wabenzelle (8) des Gitters (7) umschließt, vor allem auf Ebene eines Befestigungspunktes (17) des Schutzes (5).

8. Schmutzfänger-Schutz nach einem der Ansprüche 1 bis 7, **dadurch gekennzeichnet, dass** das Gitter (7) zusätzlich zu seinen Wabenzellen (8) größere Hohlräume (14) mit abgeflachtem Boden aufweist, die in den Bereichen ausgebildet sind, die für die Befestigung des Schmutzfänger-Schutzes (5) vorgesehen sind, wobei die Hohlräume (14) insbesondere für die Aufnahme und zur Abstützung auf ihrem Boden (14a) einer Befestigungsschraube (17) oder eines Organs wie eine Mutter (15) oder Scheibe (16) geeignet sind, die zur Befestigung des Schutzes (5) an seinem Halter (10) beitragen.

9. Schmutzfänger-Schutz nach einem der Ansprüche 1 bis 8, **dadurch gekennzeichnet, dass** er aus zwei Abschnitten (5a, 5b) hergestellt ist, mit einem oberen Abschnitt (5a), der von einem Gitter (7) mit Wabenzellen (8) gebildet wird, das an der Innenseite eines Kotflügels (1) oder einer Kotflügelflosse (21) oder eines anderen Halters anliegt und befestigt ist, der hier die Vollwand bildet, und mit einem unteren Abschnitt (5b), der über den Kotflügel (1) oder die Kotflügelflosse (21) hinausragt, wobei der untere Abschnitt (5b) von dem Gitter (7) mit Wabenzellen (8) und einer ebenen Platte (6) gebildet wird, die die Vollwand darstellt.

10. Schmutzfänger-Schutz nach einem der Ansprüche 1 bis 9, **dadurch gekennzeichnet, dass** das einzige Gitter (7) aus synthetischem warmformbarem Material bestehen, wobei die Wabenzellen (8) dieses Gitters (7) und gegebenenfalls die Hohlräume (14) zur Befestigung dieses Schutzes (5) durch Warmformen hergestellt sind.

11. Verfahren zur Herstellung eines Schmutzfänger-Schutzes (5) nach Anspruch 10, **dadurch gekennzeichnet, dass** es die Abfolge folgender Schritte aufweist:
- Ausgangspunkt ist ein Gitter (7) aus synthetischem warmformbarem Material, das vorher hergestellt wurde,
- Warmformen des Gitters (7), um die Wabenzellen (8) gemäß dem gewollten Motiv über die gesamte Größe des Gitters (7) zu erhalten,
- Abkühlung des Gitters (7),
- Verbindung dieses Gitters (7) mit der Vollwand(6) durch Verschweißen der Böden (8a) der Wabenzellen (8) mit dieser Wand (6),
- gegebenenfalls mindestens lokale Erwärmung des Gitters (7) und Herstellung der Hohlräume (14) zur Befestigung des Schutzes (5) durch Warmformen.
